# EUROPÄISCHE PATENTANMELDUNG

(11) **EP 3 553 486 A2**
(43) Veröffentlichungstag der Anmeldung: **16.10.2019**
(21) Anmeldenummer: 19163596.0
(22) Anmeldetag: 19.03.2019
(51) Int. Cl.: G01L 5/13, A01B 63/00, B60D 1/00, B60T 1/00, G01L 5/16

(54) **MESSEINRICHTUNG ZUM MESSEN VON KRÄFTEN UND/ODER MOMENTEN ZWISCHEN EINEM MOTORISIERTEN FAHRZEUG UND EINEM DAVON GEZOGENEN ODER GESCHOBENEN ANHÄNGER ODER ANBAUGERÄT**

(30) Priorität: 22.03.2018 DE 102018106855
(71) Anmelder: WABCO GmbH, 30453 Hannover (DE)
(72) Erfinder: BRÜTT, Mirko, 30952 Ronnenberg (DE); BÜHRKE, Johannes, 38102 Braunschweig (DE); FRERICHS, Ludger, 48336 Sassenberg (DE); HANKE, Steffen, 30419 Hannover (DE); KEMPER, Sebastian, 38118 Braunschweig (DE); THIELKE, Lars, 29308 Winsen/Aller (DE)
(74) Vertreter: Copi, Joachim

(57) **Zusammenfassung**

Die Erfindung betrifft eine Messeinrichtung (60) zum Messen von Kräften und/oder Momenten zwischen einem motorisierten Fahrzeug (1) und einem davon gezogenen oder geschobenen Anhänger oder Anbaugerät, wobei die Messeinrichtung (60) wenigstens drei an einem Träger (71) quer zu einer gedachten Längsachse des motorisierten Fahrzeugs (1) sowie zueinander beabstandet angeordnete Sensorelemente (79, 80) aufweist, wobei die Messeinrichtung (60) in einem Kupplungsbereich zwischen dem motorisierten Fahrzeug (1) und dem gezogenen oder geschobenen Anhänger oder Anbaugerät angeordnet ist, und wobei die Sensorelemente (79, 80) zur Übertragung derer Messwerte mit einem Auswertegerät (40) verbunden sind, welches dazu eingerichtet ist, diese Messwerte in Signale für Kraftanzeigen und/oder Momentenanzeigen nach Größe und Richtung umzuwandeln.

## Beschreibung

Die Erfindung betrifft eine Messeinrichtung zum Messen von Kräften und/oder Momenten zwischen einem motorisierten Fahrzeug und einem davon gezogenen oder geschobenen Anhänger oder Anbaugerät.

Aus der EP 2 893 793 B1 ist ein Zugkraftmesssystem bekannt, welches in einem Anhängebock an einem Traktor integriert ist. Der Anhängebock ist dazu ausgelegt, an einem Heckrahmen eines Ackerschleppers befestigt zu werden und weist linke und rechte Zugverbindungsstützen auf, wobei die linken und rechten Zugverbindungsstützen jeweils eine entsprechende linke und rechte Zugverbindung mit einer entsprechenden linken und rechten Seite des Anhängebocks koppeln. Es werden nur horizontale Zugkräfte, die von den linken und rechten Zugverbindungen auf die linken und rechten Zugverbindungsstützen ausgeübt werden, mechanisch summiert. Ein in einem Gehäuse, geschützt zwischen den Zugverbindungen angeordneter Zugkraft-Messwandler generiert daraus ein eindimensionales Zugkraftsignal. Der Anhängebock ist kompliziert aufgebaut, und der Zugkraft-Messwandler lässt sich nur mit diesem Anhängebock verwenden. Das Zugkraftmesssystem ist nicht dazu geeignet, Kräfte und/oder Momente zwischen einem motorisierten Fahrzeug und einem davon gezogenen oder geschobenen Anhänger oder Anbaugerät nach Größe und Richtung zu generieren und gegebenenfalls anzuzeigen.

Vor diesem Hintergrund lag der Erfindung die Aufgabe zugrunde, Koppelkräfte und Koppeldrehmomente am Kupplungspunkt zwischen einem motorisierten Fahrzeug, insbesondere einem Traktor, und einem Anhänger oder Anbaugerät während des Fahrens in drei Dimensionen zu messen, ohne dass dafür besondere Einrichtungen am Anhänger oder Anbaugerät vorgesehen werden müssen.

Gelöst wird diese Aufgabe durch eine Messeinrichtung, welche die Merkmale des Anspruchs 1 aufweist. Vorteilhafte Weiterbildungen sind in den abhängigen Ansprüchen genannt.

Demnach betrifft die Erfindung eine Messeinrichtung zum Messen von Kräften und/oder Momenten zwischen einem motorisierten Fahrzeug und einem davon gezogenen oder geschobenen Anhänger oder Anbaugerät.

Erfindungsgemäß ist vorgesehen, dass die Messeinrichtung wenigstens drei an einem Träger quer zu einer gedachten Längsachse des motorisierten Fahrzeugs sowie zueinander beabstandet angeordnete Sensorelemente aufweist, wobei die Messeinrichtung in einem Kupplungsbereich zwischen dem motorisierten Fahrzeug und dem gezogenen oder geschobenen Anhänger oder Anbaugerät angeordnet ist, und wobei die Sensorelemente zur Übertragung derer Messwerte mit einem Auswertegerät verbunden sind, welches dazu eingerichtet ist, diese Messwerte in Signale für Kraftanzeigen und/oder Momentenanzeigen nach Größe und Richtung umzuwandeln.

Diese Messeinrichtung befindet sich grundsätzlich im Bereich des motorisierten Fahrzeugs, so dass an einem Anhänger oder Anbaugerät oder deren Kupplungsvorrichtungen keine Veränderungen vorgenommen zu werden brauchen. Aufgrund der in allen drei Raumkoordinaten ermittelbaren Messwerte in Form von Kräften und/oder Momenten nach Betrag und Richtung ist es in Weiterbildung der Erfindung vorgesehen, das erwähnte Auswertegerät in Datenverbindung mit einem Fahrzeugzustand-Managementsystem zu bringen, das dazu eingerichtet ist, aus den Messwerten der Sensorelemente instabile Fahrsituationen zu erkennen und Gegensteuermaßnahmen einzuleiten. Das Fahrzeugzustand-Managementsystem ist hierzu vorzugsweise als ein Mikrocomputer ausgebildet, welcher zur Durchführung von Gegensteuermaßnahmen mit einer geeigneten Software ausgestattet ist sowie mit geeigneten Aktuatoren und/oder elektromagnetischen Steuerventilen zur Betätigung derselben verbunden ist.

Des Weiteren ist das Fahrzeugzustand-Managementsystem in Weiterbildung der Erfindung so eingerichtet, dass es in der Lage ist, aus den Messwerten der Sensorelemente Steuersignale für Aktuatoren zur Bewirkung einer Abstimmung der Bremswirkung des motorisierten Fahrzeugs und des Anhängers oder des Anhängegeräts aufeinander zu erzeugen.

Gemäß einer vorteilhaften Weiterbildung einer die Merkmale der Erfindung aufweisenden Messeinrichtung ist vorgesehen, dass die Messeinrichtung als Modulpaket zwischen einer Anschraubaufnahme am motorisierten Fahrzeug für einen Standard-Anhängebock und diesem Standard-Anhängebock montiert ist, und dass eine Standard-Anhängevorrichtung, wie etwa eine Standard-Maulkupplung oder eine Standard-Kugelkopfkupplung, direkt am Standard-Anhängebock befestigt ist.

Vorzugsweise ist diese Standard-Anhängevorrichtung am Standard-Anhängebock lösbar und höhenverstellbar befestigt.

Außerdem ist es bevorzugt vorgesehen, dass die Messeinrichtung als Modulpaket an einem Standard-Anhängebock am motorisierten Fahrzeug montierbar ist sowie mittels eines am Standard-Anhängebock angeordneten Kupplungsträgers mit einer Standard-Anhängevorrichtung, wie etwa eine Standard-Maulkupplung oder eine Standard-Kugelkopfkupplung, verschraubt ist.

Besonders vorteilhaft ist es, wenn auch der Kupplungsträger am Standard-Anhängebock lösbar und höhenverstellbar befestigt ist.

Die erfindungsgemäße Messeinrichtung kann vorteilhafterweise derartig aufgebaut sein, dass vier Sensorelemente als Kraftsensoren dienen sowie als Wägezellen, Dehnungsmessstreifen oder SAW-Elemente (Surface-Acoustic-Wave-Element) ausgebildet sind, dass die vier Sensorelemente an vier um etwa zwischen 60° und 120° gegeneinander versetzten, sich radial erstreckenden Messarmen eines messkreuzförmigen Trägers angeordnet sind, dass der messkreuzförmige Träger kraft-, form- oder stoffschlüssig an eine Basisplatte gekoppelt ist, und dass der messkreuzförmige Träger zwischen der Basisplatte und einem Standard-Kupplungsträger eingespannt ist.

Weiter ist bevorzugt vorgesehen, dass eine Vorspannung auf Messarme des messkreuzförmigen Trägers mittels zwischen einer Anschraubplatte einer Standard-Anhängekupplung und einem Standard-Kupplungsträger angeordneten Dehnschrauben aufgebracht ist.

Hierbei ist es vorteilhaft, wenn vorgesehen ist, dass der messkreuzförmige Träger eine von seinen Messarmen axial vorstehende, zur Basisplatte gerichtete, zentrale Nabe aufweist, welche sich an der Basisplatte abstützt und mit dieser kraft-, stoff-, oder formschlüssig gekoppelt ist. Hierdurch lassen sich an dem messkreuzförmigen Träger zwar nur Zugkräfte übertragen, die beim Ziehen eines Anhängers oder eines Anbaugeräts auftreten, also keine Druckkräfte, wie sie beim Schieben eines Anhängers oder eines Anbaugeräts auftreten können.

Um auch diese Druckkräfte messen zu können, kann vorgesehen sein, dass an den radial äußeren Enden der Messarme des messkreuzförmigen Trägers zum Standard-Kupplungsträger gewandte axiale Vorsprünge als Abstandshalter für die Messarme gegenüber dem Standard-Kupplungsträger ausgebildet sind. Dadurch lassen sich die Messarme des messkreuzförmigen Trägers axial in beide Richtungen durch Zug- und Druckkräfte bewegen und es werden dabei dessen Messarme entsprechend verformt, so dass sich dreidimensionale Werte für die Ermittlung der Zug- und Drucckräfte sowie der auf den Traktor wirkenden Momente berechnen lassen.

Eine konstruktiv vorteilhafte Ausführungsform der zentralen Nabe besteht darin, dass ein axial vorstehender Bereich der zentralen Nabe in eine Vertiefung in der Basisplatte eingreift und darin mittels einer eine Bohrung in einem Wandelement der Basisplatte durchgreifende Befestigungsschraube befestigt ist. Der in die Vertiefung der Basisplatte eingreifende, axial vorstehende Bereich der zentralen Nabe kann als Verdrehsicherung unrund ausgeführt sein, also beispielsweise Anflächungen aufweisen, wofür dann die Vertiefung, in die der axial vorstehende Bereich der zentralen Nabe eingreift, entsprechend geometrisch ergänzend geformt ist.

Vorteilhafterweise lässt sich die Messeinrichtung als Modulpaket, gebildet aus der Anschraubplatte, der Standard-Anhängevorrichtung, der Adapterplatte, der Basisplatte, dem messkreuzförmigen Träger und dem Standard-Kupplungsträger, die mittels der Dehnschrauben gegeneinander verspannt sind, an einem am motorisierten Fahrzeug befestigten Standard-Anhängebock höhenverstellbar anbringen.

Insbesondere kann die Messeinrichtung als Modulpaket an einem Standard-Anhängebock am motorisierten Fahrzeug montierbar ausgebildet sein und mittels eines am Standard-Anhängebock angeordneten Kupplungsträgers mit einer Standard-Anhängevorrichtung, wie Maulkupplung oder Kugelkopfkupplung, verschraubt sein. Besonders bevorzugt ist es, wenn der Kupplungsträger am Standard-Anhängebock lösbar und höhenverstellbar befestigt ist.

Durch die Wirkverbindung zwischen dem Standard-Anhängebock und der Basisplatte werden die Sensorelemente mit den Messarmen des messkreuzförmigen Trägers durch die Last des gezogenen oder geschobenen Anhängers oder des Anbaugeräts, abhängig von der Größe und der Richtung der Beanspruchungen des Standard-Anhängebocks verformt. Die Signale der Sensorelemente lassen sich durch das Auswertegerät mittels bekannter Algorithmen zu Kräften Fx, Fy, Fz in X-, Y- und Z-Richtung eines rechtwinkligen Koordinatensystems berechnen, ebenso die auftretenden Momente Mx, My und Mz. Diese Kräfte und Momente sind abhängig von der Höhe H der Standard-Anhängevorrichtung vom Niveau des Erdbodens und von einem Winkel α, den eine Deichsel eines Anhängers oder eines Anbaugeräts in einer waagerechten Querebene gegenüber dem motorisierten Fahrzeug einnimmt, und ebenso von einem Winkel β, den die Deichsel des Anhängers oder des Anbaugeräts gegenüber der waagerechten Querebene des motorisierten Fahrzeugs nach oben oder unten einnimmt.

Gemäß einer zweiten vorteilhaften Ausführungsform der erfindungsgemäßen Messeinrichtung können vier Sensorelemente in Form von Wägezellen, Dehnungsmessstreifen oder SAW-Elementen als Kraftsensoren arbeitend an vier um etwa 90° gegeneinander versetzten, sich radial von einer zentralen zylindrischen Nabe erstreckenden Speichen angeordnet sein, die kraft-, form- oder stoffschlüssig mit einem Träger in Form einer Messplatte gekoppelt sind. Dieser Träger in Form einer Messplatte ist zusammen mit einer Adapterplatte, mit welcher ein axial vorstehender Bereich der zentralen, zylindrischen Nabe form- oder stoffschlüssig gekoppelt ist, zwischen einer Anschraubplatte einer Standard-Anhängekupplung und einem Standard-Kupplungsträger eingespannt.

Hierbei kann eine Vorspannung auf die Speichen über einen axial vorstehenden Bereich der zylindrischen Nabe mittels zwischen der Anschraubplatte einer Standard-Anhängekupplung und dem Standard-Kupplungsträger angeordneten Dehnschrauben aufgebracht werden, wobei in diesem Träger in Form einer Messplatte dem Kupplungsträger zugewandte, die Speichen frei gebende, deren Verformung beim Aufbringen der Vorspannung mittels der Dehnschrauben ermöglichende Ausnehmungen in diesem Träger ausgebildet sind.

Auch in diesem Fall kann die Messeinrichtung als Modulpaket, bestehend aus der Anschraubplatte, der Standard-Anhängevorrichtung, der Adapterplatte, dem als Messplatte ausgebildeten Träger sowie dem Standard-Kupplungsträger, die mittels der Dehnschrauben gegeneinander verspannt sind, an einem am motorisierten Fahrzeug befestigten Standard-Anhängebock höhenverstellbar anbringbar ausgebildet sein.

Eine sich bei durchgeführten Untersuchungen als besonders vorteilhaft gezeigte vierte Ausführungsform einer die Merkmale der Erfindung aufweisenden Messeinrichtung ist zunächst ebenfalls dadurch gekennzeichnet, dass vier Sensorelemente als Kraftsensoren dienen sowie als Wägezellen, Dehnungsmessstreifen oder SAW-Elemente ausgebildet sind, und dass diese Sensorelemente an vier um zwischen 60° und 120° gegeneinander versetzten, sich radial erstreckenden Messarmen eines messkreuzförmigen Trägers angeordnet sind. Zur Reduzierung des Bauteil- und Montageaufwandes sowie zur Erzielung besonders vorteilhafter Messergebnisse hinsichtlich der Richtung der auftretenden und zu messenden Kräfte ist jedoch zusätzlich vorgesehen, dass der messkreuzförmige Träger kraft-, form- oder stoffschlüssig mit einer Basisplatte verbunden ist, dass an diesem messkreuzförmigen Träger eine Anschraubplatte für eine Standard-Kupplung festschraubbar ist, und dass die Basisplatte mit einen Standard-Kupplungsträger fest verbindbar ist.

Durch diese Konstruktion weist die Messvorrichtung neben den notwendigen Sensoren und Befestigungsschrauben nur vier Bauteile auf, nämlich den messkreuzförmigen Träger, eine an diesem Träger befestigbare Anschraubplatte für eine Standard-Kupplung, eine an der anderen Axialseite des Trägers mit diesem verbindbare Basisplatte, sowie einen an der Basisplatte befestigbaren Kupplungsträger. Dies wird anhand eines Ausführungsbeispiels noch weiter erläutert.

In Weiterbildung dieser besonders günstigen Konstruktion ist bevorzugt vorgesehen, dass der messkreuzförmige Träger eine von seinen Messarmen axial vorstehende, zur Basisplatte gerichtete zentrale Nabe aufweist, welche sich an der Basisplatte abstützt und mit dieser kraft-, stoff-, oder formschlüssig verbunden ist. Die zentrale, axial vorstehende Nabe schafft aufgrund ihrer axialen Länge ausreichend Platz, damit sich die Messarme des messkreuzförmigen Trägers bei einer Zug- oder Druckbelastung der Gesamtvorrichtung durch das Zugfahrzeug oder das Anhängefahrzeug beziehungsweise eines Anbaugeräts axial frei verformen können.

Hierzu sind auch axiale Vorsprünge an den radial äußeren Enden der Messarme des messkreuzförmigen Trägers vorgesehen, welche sich hin zur Anschraubplatte für eine Standard-Kupplung erstecken und als axiale Abstandshalter für die Messarme gegenüber der Anschraubplatte dienen.

Schließlich kann auch diese vierte Ausführungsform der Messeinrichtung als Modulpaket bestehend aus der Anschraubplatte für eine Standard-Anhängevorrichtung, der Basisplatte, dem messkreuzförmigen Träger und dem Standard-Kupplungsträger, welche vorzugsweise mittels Befestigungsschrauben miteinander verbunden sind, an einem am motorisierten Fahrzeug befestigten Standard-Anhängebock höhenverstellbar anbringbar ausgebildet sein.

Es ist ersichtlich, dass an einem Standard-Anhängebock unterschiedliche Standard-Anhängevorrichtungen angebracht werden können, die sich durch das geschilderte vertikale Führungssystem am Anhängebock in ihrer Höhe einstellen lassen.

Die Übertragung der Signale der Sensorelemente zum motorisierten Fahrzeug kann über eine Kabelverbindung oder drahtlos, beispielsweise mittels W-LAN, erfolgen. Aufgrund des Aufbaus der erfindungsgemäßen Messeinrichtung lässt sich diese sowohl an landwirtschaftlichen Fahrzeugen, insbesondere Ackerschlepper, als auch an Straßenfahrzeugen verwenden. Die verschiedenen Standard-Anhängevorrichtungen lassen sich modular austauschen, ohne dass an der Messeinrichtung etwas zu ändern wäre. Mit der erfindungsgemäßen Messeinrichtung lassen sich auch die Massen des motorisierten Fahrzeugs und des Anhängers oder Anbaugeräts bestimmen, wodurch sich die Bremswirkungen von motorisierten Fahrzeugen und Anhänger oder Anbaugeräten verbessert abstimmen lassen.

Die Erfindung wird nachstehend anhand mehrerer, in der beigefügten Zeichnung dargestellter Ausführungsbeispiele weiter erläutert. In der Zeichnung zeigt
Fig. 1 eine vereinfachte, auseinander gezogene Darstellung der Bauteile einer Messeinrichtung zum Messen von Kräften und/oder Momenten zwischen einem motorisierten Fahrzeug und einem davon gezogenen oder geschobenen Anhänger oder Anbaugerät, wovon
Fig. 1A eine teilweise Ansicht eines motorisierten Fahrzeugs in Form eines Traktors mit einer schematischen Seitenansicht der Messeinrichtung gemäß Fig. 1 zeigt,
Fig. 1B eine auseinander gezogene isometrische Darstellung der Messeinrichtung gemäß Fig. 1A zeigt,
Fig. 1C eine isometrische Darstellung eines kastenförmigen Standard-Anhängebocks für einen Traktor zeigt,
Fig. 1D eine schematische isometrische Darstellung einer Standard-Anhängevorrichtung in Form einer Maulkupplung zeigt, und bei der
Fig. 2 eine vereinfachte, auseinander gezogene isometrische Darstellung der Bauelemente einer erfindungsgemäßen Messeinrichtung gemäß einer zweiten Ausführungsform zeigt, wovon,
Fig. 2A eine isometrische Darstellung eines kastenförmigen Standard-Anhängebocks für einen Traktor zeigt,
Fig. 2B eine isometrische Darstellung eines Standard-Kupplungsträgers mit Verriegelungsmitteln zeigt,
Fig. 2C eine isometrische Darstellung einer Messeinrichtung an einem Träger in Form einer Messplatte mit einer Speichenradgeometrie gemäß Fig. 2 zeigt,
Fig. 2D eine isometrische Darstellung einer Adapterplatte zeigt,
Fig. 2E eine isometrische Darstellung einer Standard-Maulkupplung mit Standard-Anschraubplatte zeigt,
Fig. 2F eine dazu alternative isometrische Darstellung einer Standard-Kugelkopfkupplung mit Anschraubplatte zeigt,
Fig. 2G eine Schnittansicht der Messeinrichtung gemäß Fig. 2A mit den Elementen gemäß den Figuren 2B bis 2E zeigt, und bei der
Fig. 3 eine isometrische Darstellung einer erfindungsgemäßen Messeinrichtung mit einem messkreuzförmigen Träger gemäß Fig. 4 zeigt,
Fig. 4 eine isometrische Darstellung eines mit einer Basisplatte zu verspannenden messkreuzförmigen Träger gemäß Fig. 3 zeigt,
Fig. 5 eine isometrische Rückansicht der Basisplatte gemäß Fig. 4 zeigt,
Fig. 6 eine Schnittansicht der zusammengebauten Messeinrichtung gemäß den Figuren 3 bis 5 zeigt,
Fig. 7 ein rechtwinkliges, dreidimensionales Koordinatenkreuz mit eingezeichneten Kräften Fx, Fy, Fz und Momenten Mx, My, Mz zeigt, und
Fig. 8 eine axiale Schnittansicht der zusammengebauten Messeinrichtung ähnlich der gemäß Fig. 6 zeigt.

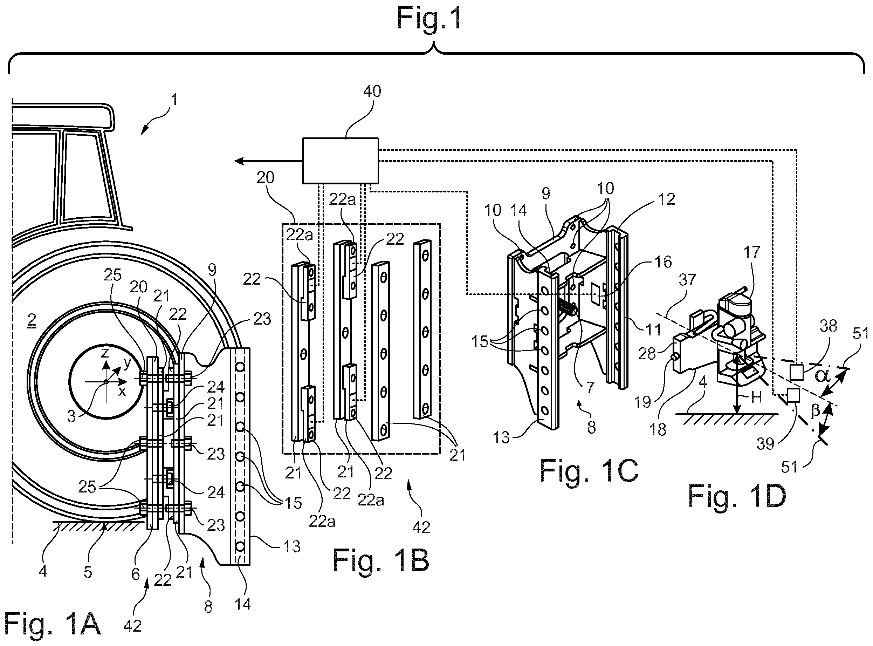

Demnach zeigt Fig. 1 eine vereinfachte, auseinander gezogene Darstellung der Bauteile einer Messeinrichtung 42 zum Messen von Kräften und/oder Momenten zwischen einem motorisierten Fahrzeug und einem davon gezogenen oder geschobenen, nicht erkennbaren Anhänger oder Anbaugerät. Im Detail zeigt Fig. 1A eine Teilansicht eines motorisierten Zugfahrzeugs in Form eines Traktors 1, an dessen Heck ein kastenförmiger Standard-Anhängebock 8 angeschraubt ist, wie später noch erläutert wird.

Fig. 1B zeigt schematisch eine erste Messeinrichtung 42, deren Träger 20 für Sensorelemente 22 in Form einer Messplatte ausgebildet ist und mittels Befestigungsschrauben 25 an einer Anschraubaufnahme 6 in Form einer Befestigungsplatte am Traktor 1 verschraubt ist. An dem als Messplatte ausgebildeten Träger 20 sind insgesamt vier Sensorelemente 22 mittels versenkter Befestigungsschrauben 24 über zwischengelagerte Befestigungsschienen 21 festschraubt.

Die Sensorelemente 22 weisen freistehende Zungen 22a auf, die über ein weiteres Paar Befestigungsschienen 21 mittels Befestigungsschrauben 23 an dem Standard-Anhängebock 8 festschraubt sind. An den freistehenden Zungen 22a sind die Sensorelemente 22 angebracht, die drahtlos oder über mit gepunkteter Line dargestellte Leitungsverbindungen mit einem Auswertegerät 40 verbunden sind. Das Auswertegerät 40 ist zumindest als eine elektronische Schaltung, jedoch vorzugsweise als Mikrocomputer ausgebildet. Es kann an dem als Messplatte ausgebildeten Träger 20 oder am Traktor 1 angeordnet sein.

In einer Raddrehachse 3 des Hinterrades 2 des Traktors 1 ist der Nullpunkt eines rechtwinkligen, dreiachsigen Koordinatensystems mit Koordinatenachsen X, Y, Z eingezeichnet, wobei die Z -Achse durch einen Radaufstandspunkt 5 des Hinterrades 2 auf dem Niveau des Erdbodens 4 verläuft.

Der in Fig. 1A in einer schematischen Seitenansicht dargestellte Standard-Anhängebock 8 ist am Traktor 1 mittels einer Traktorbefestigungsplatte 9 an der Anschraubaufnahme 6 befestigt, zwischen denen die erwähnte Messeinrichtung 42 befestigt ist. Die Sensorelemente 22 dienen der Kräftemessung und können als Wägezellen, Dehnungsmessstreifen oder SAW-Elemente (Surface-Acoustic-Wave-Elemente) ausgebildet sein.

Der in Fig. 1C dargestellte kastenförmige Standard-Anhängebock 8 weist die bereits erwähnte Traktorbefestigungsplatte 9 sowie das gleiche Bohrungsschema 10 auf wie die Befestigungsplatte 6 am Traktor 1. An Seitenwänden des Standard-Anhängebocks 8 sind parallel zueinander eine erste Rastschiene 11 mit einer ersten Rastnut 12 und eine zweite Rastschiene 13 mit einer zweiten Rastnut 14 angebracht, deren Rastnuten 12, 14 zueinander weisend geöffnet sind. Entlang der beiden Rastnuten 12, 14 sind Bohrungen 15 für Verriegelungsmittel 19 in Form von Rastzapfen ausgebildet, in die beispielsweise die Rastzapfen 19 an einer Rastplatte 18 einer Standard-Maulkupplung 17 eingreifen und diese in einer Höhe H vom Niveau des Erdbodens 4 fixieren. An einer Seitenwand des Standard-Anhängebocks 8 ist ein Sensor 16 zum Erkennen der Höhe H der Standard-Kupplung 17 angeordnet.

Des Weiteren ist gemäß Fig. 1D ein Sensorelement 38 vorhanden, welches in einer waagerechten Querebene 37 in der Höhe H der Standard-Kupplung 17 den Winkel α zwischen einer Deichsel 51 eines Anhängers oder Anbaugeräts und einer durch eine Mittellängsachse des Traktors 1 in Höhe H in X-Richtung verlaufenden Geraden misst. Außerdem ist ein weiteres Sensorelement 39 zum Messen des Winkels β nach oben oder unten zwischen der Deichsel 51 eines Anhängers oder Anbaugeräts und einer waagerechten Querebene in der Höhe H in X-Richtung vorhanden.

Die genannten Sensorelemente 16, 38, 39 sind ebenfalls drahtlos oder über die mit gepunkteter Line dargestellten aber nicht weiter bezeichneten Leitungen mit dem Auswertegerät 40 verbunden. Daher kann das Auswertegerät 40 mittels bekannter Algorithmen sowohl die auf die Messeinrichtung 20 einwirkenden Kräfte Fx, Fy, Fz als auch die entsprechenden Momente Mx, My, Mz aus den Signalen der Sensorelemente 16, 22, 38, 39 nach Größe und Richtung berechnen sowie an ein Fahrzustand-Managementsystem weiterleiten. Dieses Fahrzustand-Managementsystem kann aus den Signalen der Sensorelemente 16, 22, 38, 39 instabile Fahrsituationen ableitend erkennen und Gegensteuermaßnahmen einleiten. Ebenso ist es möglich, aus den Signalen der Sensorelemente 16, 22, 38, 39 eine Abstimmung der Bremswirkung des Traktors 1 und des Anhängers oder des Anbaugeräts vorzunehmen. Das Fahrzustand-Managementsystem ist beispielswiese als ein Computerprogramm ausgebildet und in einem gesonderten Mikrocomputer oder in dem Auswertegerät 40 als Software abgespeichert.

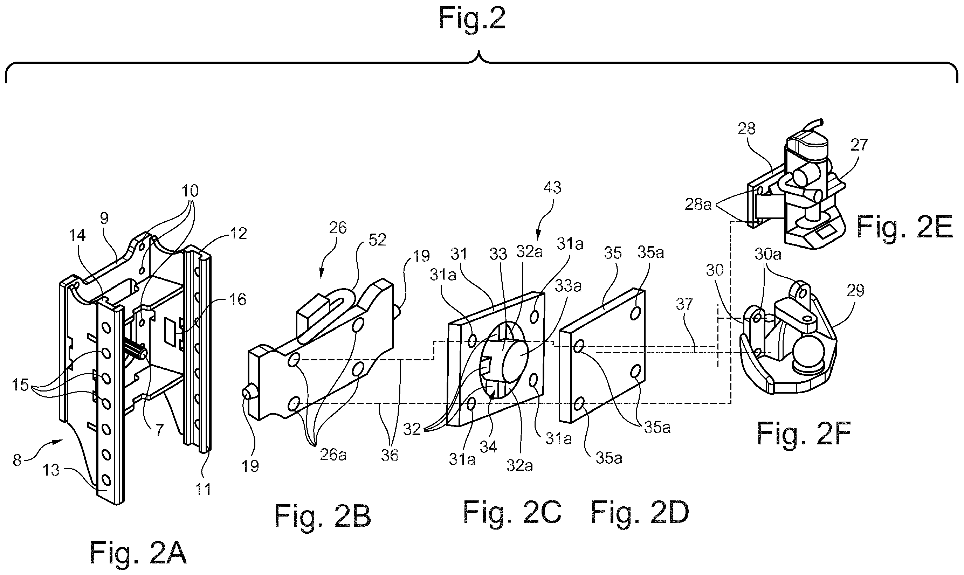

Die Messeinrichtung 42 lässt sich als Modulpaket sowohl zwischen dem Traktor 1 und dem Standard-Anhängebock 8 montieren als auch mit dem als Messplatte ausgebildeten Träger 20 in die Rastnuten 12, 14 des Standard-Anhängebocks 8 einschieben und darin in der erwähnten Höhe H fixieren, wobei eine Standard-Anhängevorrichtung 27 in Form einer Maulkupplung gemäß Fig. 2E mit ihrer Anschraubplatte 28 dann an dem Träger 20 verschraubt ist. Hierzu weist die Anschraubplatte 28 der Standard-Anhängevorrichtung 27 ein kongruentes Standard-Lochschema 28a auf wie der Träger 20.

Eine in Fig. 1C sichtbare Zapfwelle 7 lässt sich für den Antrieb von Nebenaggregaten nur dann benutzen, wenn diese nicht durch die Messeinrichtung 42 versperrt ist. Gegebenenfalls weist der messplattenförmige Träger 20 eine Durchführungsöffnung für die Zapfwelle 7 auf.

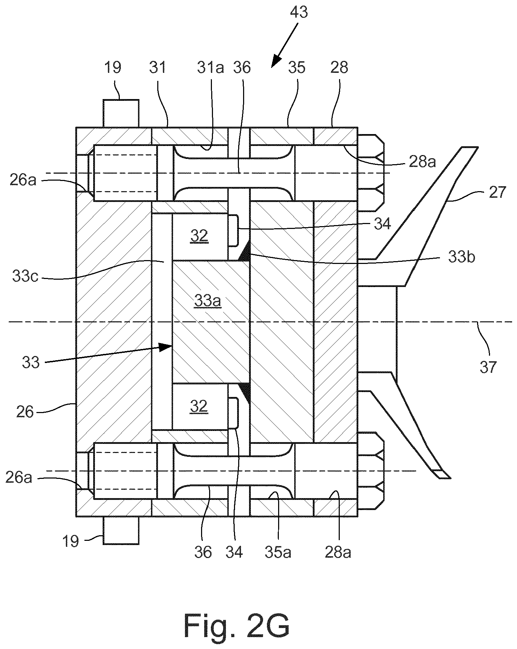

Eine zweite Ausführungsform einer erfindungsgemäßen Messeinrichtung 43 ist in Fig. 2 dargestellt, deren Fig. 2A den kastenförmigen Standard-Anhängebock 8 zeigt, welcher auch in Fig. 1C dargestellt ist. Diese Messeinrichtung 43 weist einen Träger 31 in Form einer Messplatte mit einem Standard-Lochschema 31a auf, das zu einem Standard-Lochschema 26a von Gewindebohrungen in einem Standard-Kupplungsträger 26 deckungsgleich ist. Der Standard-Kupplungsträger 26 lässt sich wie bereits beschrieben in die Rastnuten 12, 14 des Standard-Anhängebocks 8 einschieben und mittels Verriegelungsmittel 19 in Form der Rastzapfen am Standard-Kupplungsträger 26 in den Bohrungen 15 des Standard-Anhängebocks 8 fixieren.

Wie Fig. 2C erkennen lässt, weist der Träger 31 in Form einer Messplatte vorzugsweise einstückig an diesem ausgebildete radiale Speichen 32 auf, die in einer Ebene unter einem Winkel von 90° zueinander angeordnet sind. Zwischen den radialen Speichen 32 und dem Träger 31 sind somit Freiräume 32a ausgebildet, um es den radialen Speichen 32 zu erlauben, sich in Richtung der waagerechten Querebene 37 zu verformen.

Die Speichen 32 sind radial innen mit einer zentralen zylindrischen Nabe 33 verbunden, deren axial vorstehender Bereich 33a vorzugsweise mittels einer Schweißnaht 33b mit einer Adapterplatte 35 stoffschlüssig verbunden ist (Fig. 2G). Der Träger 31 in Form einer Messplatte weist wie erwähnt ein zu dem Standard-Lochbild 26a am Standard-Kupplungsträger 26 kongruentes Standard-Lochschema 31a auf. Ein ebensolches Standard-Lochschema 35a weist auch die Adapterplatte 35 auf.

An den radialen Speichen 32 sind Sensorelemente 34 in Form von Wägezellen, Dehnungsmessstreifen oder SAW-Elementen als Kraftsensoren angebracht, die in der in Fig. 1 dargestellten Weise mit dem Auswertegerät 40 drahtlos oder über Kabel verbunden sind. Die funktechnische Übertragung der ermittelten Messwerte der Sensorelemente 34 kann auch über einen diesbezüglichen Sender erfolgen, welcher mit einer Antenne 52 verbunden ist, die an der Oberseite des Standard-Kupplungsträgers 26 angeordnet ist.

Der Träger 31 in Form einer Messplatte ist zusammen mit der Adapterplatte 35, mit welcher der axial vorstehender Bereich 33a der zentralen, zylindrischen Nabe 33 form- oder stoffschlüssig gekoppelt ist, zwischen einer Anschraubplatte 28 an einer Standard-Maulkupplung 27 oder einer Anschraubplatte 30 an einer Standard-Kugelkopfkupplung 29 und einem Standard-Kupplungsträger 26 mit Vorspannung der Speichen 32 eingespannt.

Die Vorspannung der Speichen 32 wird mittels zwischen der Anschraubplatte 28, 30 einer Standard-Anhängekupplung 27, 29 und dem Standard-Kupplungsträger 26 angeordneten Dehnschrauben 36 aufgebracht. Die Anschraubplatten 28, 30 der Standard-Anhängekupplung 27 und der Standard-Kugelkopfkupplung 29 weisen hierzu jeweils ein kongruentes Standard-Lochschema 28a, 30a zum Durchführen von Dehnschrauben 36 auf.

Wie Fig. 2G zeigt, sind in dem Träger 33 in Form einer Messplatte die Speichen 32 freigebende und deren Verformung beim Aufbringen der Vorspannung mittels der Dehnschrauben 36 ermöglichende Ausnehmung beziehungsweise Freiräume 33c ausgebildet. Hierdurch kann eine Verformung der Speichen 32 in Richtung des Standard-Kupplungsträgers 26 durch eine auf die Standard-Anhängekupplung 27 wirkende Druckkraft hervorgerufen werden, so dass diese und die von den Dehnschrauben 36 aufgebrachte Vorspannung mittels der Sensorelemente 34 messbar ist.

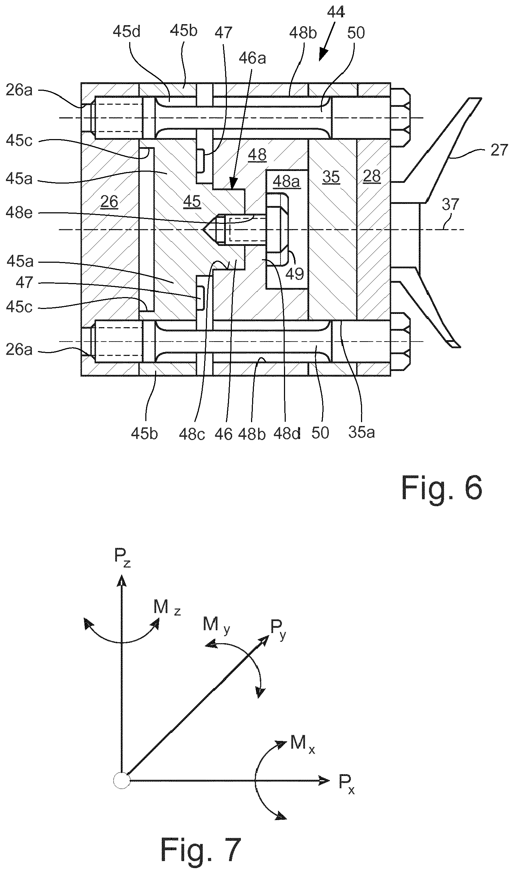

Umgekehrt wird durch eine auf die Standard-Anhängekupplung 27 aufgebrachte Zugkraft eine Bewegung der Adapterplatte 35 und damit der zentralen, zylindrischen Nabe 33a hervorgerufen. Dies bewirkt eine entsprechende Entspannung der radialen Speichen 32, die ebenfalls mittels der Sensorelemente 34 erfassbar ist und aufgrund der um 90° versetzten Anordnung der vier radialen Speichen 32 Signale ergibt, welche zusammen betrachtet durch einen entsprechenden Algorithmus des Auswertegeräts 40 Werte für die aufgebrachten Kräfte Fx, Fx, Fz in X-, Y-, Z-Richtung sowie die entsprechenden Momente Mx, My, Mz ergibt, wie dies in Fig. 7 dargestellt ist.

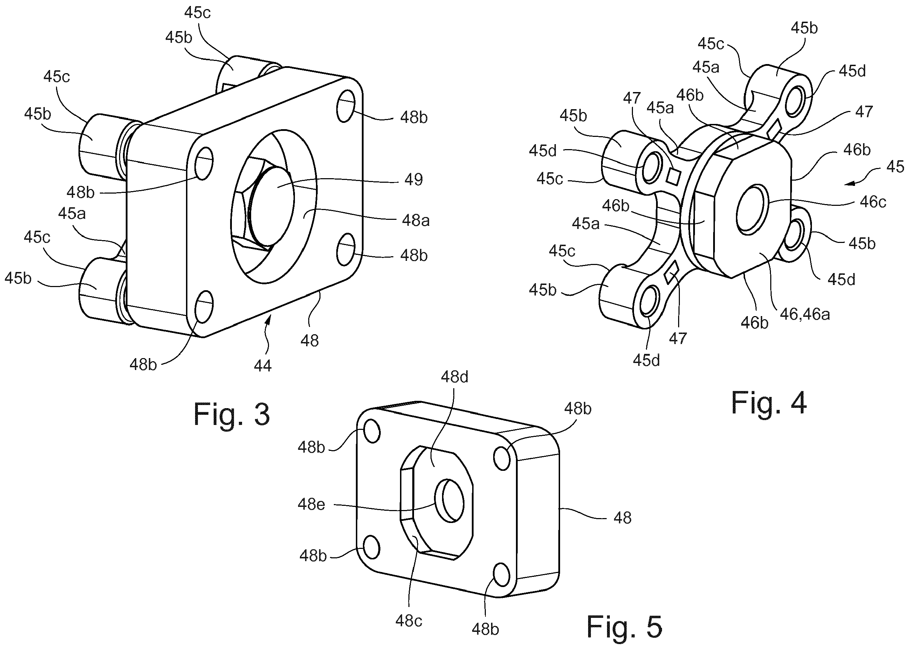

Die in den Figuren 3 bis 6 dargestellte dritte Ausführungsvariante der Messeinrichtung 44 weist einen Träger 45 in Form eines Messkreuzes mit je zwei um 60° beziehungsweise 120° zueinander beabstandete Messarme 45a auf, deren freie Enden Augen 45b mit Durchgangsbohrungen 45d aufweisen, und die an den freien Enden mit axialen Vorsprüngen 45c versehen sind, deren Funktion im Zusammenhang mit Fig. 6 erläutert wird. Der Träger 45 in Form eines Messkreuzes ist mit einer zentralen Nabe 46 versehen, die im Wesentlichen zylindrisch ausgebildet ist, jedoch an einem einseitig axial vorstehenden Bereich 46a mit Anflächungen 46b versehen ist. Dieser axial vorstehende Bereich 46a mit seinen Anflächungen 46b lässt sich in eine zur Nabe 46 kongruente, unrunde Vertiefung 48c in einer Basisplatte 48 einfügen, wodurch der Träger 45 in Form eines Messkreuzes gegenüber der Basisplatte 48 gegen ein Verdrehen gesichert ist. Die unrunde Vertiefung 48c der Basisplatte 48 endet axial an einem Wandelement 48d mit einer zentralen Durchgangsbohrung 48e für eine in Fig. 3 dargestellte Befestigungsschraube 49, die in eine Gewindebohrung 46c in der zentralen Nabe 46 des Trägers 45 in Form eines Messkreuzes eingeschraubt ist.

Auf ihrer messkreuzfernen Rückseite weist die Basisplatte 48 eine zylindrische Vertiefung 48a auf, in welche der Kopf der Befestigungsschraube 49 versenkbar ist. Außerdem zeigen die Figuren 3 und 5 deutlich, dass die Basisplatte 48 vier Durchgangsbohrungen 48b zur Durchführung der bereits erwähnten Dehnschrauben 50 aufweist, welche auch durch die Durchgangsbohrungen 45d des Trägers 45 hindurchgeführt und letztlich in den Gewindebohrungen 26a des Standard-Kupplungsträgers 26 eingeschraubt sind, welches in Fig. 6 gut erkennbar ist.

Zwischen den Augen 45b an den freien Enden der vier Messarme 45a und der zentralen Nabe 46 des Trägers 45 sind an den Messarmen 45a jeweils Sensorelemente 47 in Form von Wägezellen, Dehnungsmessstreifen oder SAW-Elementen als Kraftsensoren angeordnet sowie entsprechend Fig. 1 drahtlos oder über Kabel, wie auch die anderen Sensorelemente, mit dem Auswertegerät 40 verbunden.

Auch die Messeinrichtung 44 gemäß den Figuren 3 bis 6 ist als Modulpaket aus der Anschraubplatte 28, 30 der Standard-Anhängevorrichtung 27, 29, der Adapterplatte 35, der Basisplatte 48, dem Träger 45 in Form eines Messkreuzes und dem Standard-Kupplungsträger 26, die mittels der Dehnschrauben 50 gegeneinander verspannt sind, an einem am motorisierten Fahrzeug 1 befestigten Standard-Anhängebock 8 höhenverstellbar anbringbar.

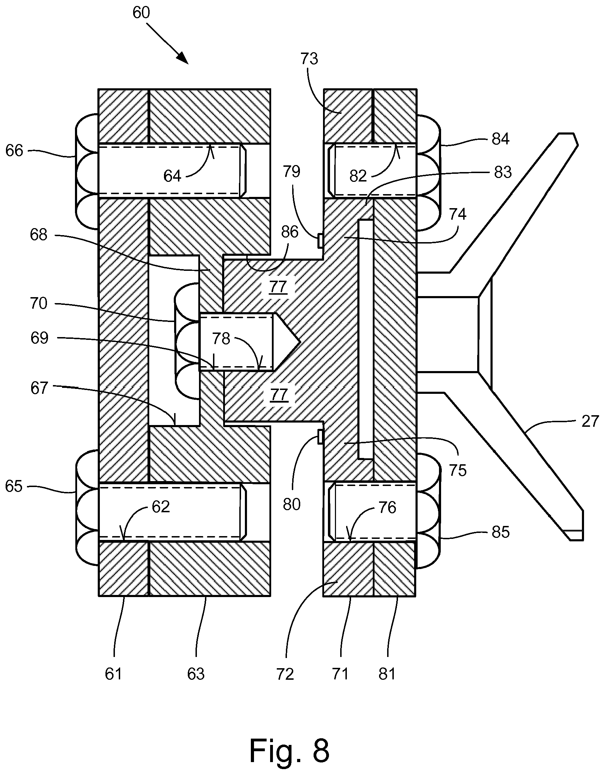

Die in Fig. 8 in einer Axialschnittansicht dargestellte vierte Ausführungsform einer die Merkmale der Erfindung aufweisenden Messeinrichtung 60 weist vorteilhaft nur sehr wenige Bauteile auf, welches die Herstellkosten und den Montageaufwand günstig beeinflusst. Zudem lassen sich mit dieser Messeinrichtung 60 nicht nur die axialen Komponenten von Druck- und Zugkräften zwischen einem Zugfahrzeug und eine Anhängevorrichtung beziehungsweise Anbaugerät besonders gut messen, sondern auch deren räumlichen Komponenten.

Hierzu weist die Messvorrichtung 60 einen messkreuzförmigen Träger 71 auf, welcher ebenfalls vier Sensorelemente 79, 80 trägt, die als Kraftsensoren dienen sowie bevorzugt als Wägezellen, Dehnungsmessstreifen oder SAW-Elemente ausgebildet sind. Die vier Sensorelemente 79, 80 sind an vier um zwischen 60° und 120° gegeneinander versetzten, sich radial erstreckenden Messarmen 74, 75 des Trägers 71 angeordnet, und sie stehen wie schon geschildert mit einem Auswertegerät 40 in Signalverbindung. Der messkreuzförmige Träger 71 weist radial innen eine zentrale Nabe 77 auf, welche sich axial ein Stück weit hin zu einer Basisplatte 63 erstreckt. Die Nabe 77 weist eine unrunde Geometrie auf, mit der sie in einer dazu komplementären unrunden Vertiefung 86 der Basisplatte 63 aufgenommen ist. Hierdurch ist eine Verdrehsicherung geschaffen. Zur kraftschlüssigen Verbindung der Basisplatte 63 mit dem messkreuzförmigen Träger 71 dient eine Befestigungsschraube 70, welche in eine Gewindebohrung 69 eines zentrischen Wandelements 68 der Basisplatte 63 und in eine Gewindebohrung 78 der Nabe 77 des messkreuzförmigen Trägers 71 eingeschraubt ist. Um ein axiales Hervorstehen dieser Befestigungsschraube 70 zu vermeiden, ist deren Schraubenkopf in einer zentrischen, axialen und zylindrischen Vertiefung 67 der Basisplatte 63 aufgenommen.

Die Basisplatte 63 selbst ist an deren sensorfernen Seite mit einem Kupplungsträger 61 fest verbunden. Hierzu dienen Befestigungsschrauben 65, 66, welche in Gewindebohrungen 62 in dem Kupplungsträger 61 und in Gewindebohrungen 64 in der Basisplatte 63 eingeschraubt sind.

Der messkreuzförmige Träger 71 ist basisplattenfern mit einer Anschraubplatte 81 fest verbunden, welche einen zugfahrzeugseitigen Teil einer Standard-Anhängerkupplung 27 trägt. Die Verbindung des Trägers 71 mit dieser Anschraubplatte 81 ist mittels Befestigungsschrauben 84, 85 realisiert, welche in Gewindebohrungen 82 in der Anschraubplatte 81 und in Gewindebohrungen 76 in den radial außen ausgebildeten Augen 72, 73 des messkreuzförmigen Trägers 71 eingeschraubt sind.

Auch bei dieser Ausführungsform der erfindungsgemäßen Messeinrichtung 60 ist vorgesehen, dass an den radialen äußeren Enden der Messarme 74, 75 des messkreuzförmigen Trägers 71 zur Anschraubplatte 81 für die Standard-Kupplung 27 gewandte axiale Vorsprünge 83 an den erwähnten Augen 72, 73 ausgebildet sind, welche als Abstandshalter für die Messarme 74, 75 gegenüber dem Anschraubplatte 81 dienen.

Die Fig. 8 lässt leicht erkennen, dass diese Messeinrichtung 60 als Modulpaket sehr einfach an einem am motorisierten Fahrzeug 1 befestigten Standard-Anhängebock 8 höhenverstellbar anbringbar ist. Dieses Modulpaket besteht neben den notwendigen Sensoren 79, 80 und Befestigungsschrauben 65, 66, 70, 84, 85 lediglich aus den vier Bauteilen Anschraubplatte 81 mit Standard-Anhängevorrichtung 27, messkreuzförmiger Träger 71, Basisplatte 48 und Kupplungsträger 61.

### Bezugszeichenliste (Teil der Beschreibung)

- 1: Motorisiertes Fahrzeug (Traktor)
- 2: Hinterrad
- 3: Raddrehachse
- 4: Niveau des Erdbodens
- 5: Radaufstandspunkt
- 6: Anschraubaufnahme (Befestigungsplatte am Traktor)
- 7: Zapfwelle
- 8: Standard-Anhängebock, kastenförmig
- 9: Traktorbefestigungsplatte am Anhängebock
- 10: Bohrungsschema am Standard-Anhängebock
- 11: Erste Rastschiene am Standard-Anhängebock
- 12: Erste Rastnut
- 13: Zweite Rastschiene am Standard-Anhängebock
- 14: Zweite Rastnut
- 15: Bohrungen für Verriegelungsmittel in Rastschiene
- 16: Sensorelement zum Erkennen der Kupplungshöhe H
- 17: Standard-Maulkupplung
- 18: Rastplatte an der Maulkupplung
- 19: Verriegelungsmittel (Rastzapfen)
- 20: Träger in Form einer Messplatte
- 21: Befestigungsschienen
- 22: Sensorelemente
- 22a: Freistehende Zungen der Sensorelemente 22
- 23: Befestigungsschrauben
- 24: Versenkte Befestigungsschrauben
- 25: Befestigungsschrauben
- 26: Standard-Kupplungsträger mit Verriegelungsmitteln
- 26a: Standard-Lochschema von Gewindebohrungen am Kupplungsträger 26
- 27: Standard-Maulkupplung
- 28: Standard-Anschraubplatte an Maulkupplung 27
- 28a: Standard-Lochschema von Durchgangsbohrungen in Anschraubplatte 28
- 29: Standard-Kugelkopfkupplung
- 30: Standard-Anschraubplatte an Kugelkopfkupplung 29
- 30a: Standard-Lochschema von Durchgangsbohrungen der Anschraubplatte 30
- 31: Träger in Form einer Messplatte
- 31a: Standard-Lochschema von Durchgangsbohrungen im Träger 31
- 32: Radiale Speichen an Träger 31
- 32a: Freiraum zwischen Speichen 32
- 33: Zentrale, zylindrische Nabe an Träger 31
- 33a: Axial vorstehender Bereich der Nabe 33
- 33b: Schweißnaht
- 33c: Ausnehmung im Träger 31
- 34: Sensorelemente an den Speichen
- 35: Adapterplatte
- 35a: Standard-Lochschema von Durchgangsbohrungen in Adapterplatte 35
- 36: Dehnschrauben
- 37: Waagerechte Querebene durch eine Längsachse des Traktors in Höhe H der Standard-Kupplung 17, in Richtung X-Achse
- 38: Sensorelement zur Messung von Winkel α
- 39: Sensorelement zur Messung von Winkel β
- 40: Auswertegerät
- 42: Erste Ausführungsform einer Messeinrichtung
- 43: Zweite Ausführungsform einer Messeinrichtung
- 44: Dritte Ausführungsform einer Messeinrichtung
- 45: Träger in Form eines Messkreuzes
- 45a: Messarme am Träger 45
- 45b: Augen an den Messarmen 45a
- 45c: Vorsprünge an den Augen 45b
- 45d: Durchgangsbohrungen in den Augen 45b
- 46: Zentrale Nabe des Trägers 45
- 46a: Einseitig axial vorstehender Bereich der Nabe 46
- 46b: Anflächungen an der Nabe 46
- 46c: Gewindebohrung in der Nabe 46
- 47: Sensorelemente an den Messarmen 45a
- 48: Basisplatte
- 48a: Zylindrische Vertiefung in der Basisplatte 48
- 48b: Durchgangsbohrungen in der Basisplatte 48
- 48c: Unrunde Vertiefung in der Basisplatte 48
- 48d: Wandelement der Basisplatte 48
- 48e: Zentrale Bohrung in der Basisplatte 48
- 49: Befestigungsschraube
- 50: Dehnschrauben
- 51: Deichsel des Anhängers oder des Anhängegeräts
- 52: Antenne
- 60: Vierte Ausführungsform einer Messeinrichtung
- 61: Standard-Kupplungsträger
- 62: Gewindebohrung im Kupplungsträger 61
- 63: Basisplatte
- 64: Gewindebohrung in der Basisplatte 63
- 65: Befestigungsschraube
- 66: Befestigungsschraube
- 67: Zylindrische Vertiefung in der Basisplatte 63
- 68: Wandelement der Basisplatte 63
- 69: Gewindebohrung im Wandelement 68
- 70: Befestigungsschraube
- 71: Träger in Form eines Messkreuzes
- 72: Auge des Trägers 71
- 73: Auge des Trägers 71
- 74: Messarm des Trägers 71
- 75: Messarm des Trägers 71
- 76: Gewindebohrung im Auge des Trägers 71
- 77: Zentrale Nabe des Trägers 71
- 78: Gewindebohrung in der Nabe des Trägers 71
- 79: Sensorelement am Messarm 74
- 80: Sensorelement am Messarm 75
- 81: Anschraubplatte für Standard-Maulkupplung 27
- 82: Gewindebohrung in der Anschraubplatte 81
- 83: Vorsprung am Auge 73
- 84: Befestigungsschraube
- 85: Befestigungsschraube
- 86: Unrunde Vertiefung in der Basisplatte 63
- H: Abstand einer Standard-Anhängekupplung am Traktor vom Niveau des Erdbodens
- X, Y, Z: Koordinatenachsen
- α: Winkel zwischen einer Deichsel eines Anhängers oder Anbaugeräts und einer durch eine Mittellängsachse des Traktors in Höhe H in X-Richtung verlaufenden Geraden
- β: Winkel nach oben oder unten zwischen einer Deichsel eines Anhängers oder Anbaugeräts und einer waagerechten Querebene in Höhe H in X-Richtung

## Patentansprüche

1. Messeinrichtung (42, 43, 44, 60) zum Messen von Kräften und/oder Momenten zwischen einem motorisierten Fahrzeug (1) und einem davon gezogenen oder geschobenen Anhänger oder Anbaugerät,
wobei die Messeinrichtung (42, 43, 44, 60) wenigstens drei an einem Träger (20, 31, 45, 71) quer zu einer gedachten Längsachse des motorisierten Fahrzeugs (1) sowie zueinander beabstandet angeordnete Sensorelemente (22, 34, 47, 79, 80) aufweist, wobei die Messeinrichtung (42, 43, 44, 60) in einem Kupplungsbereich zwischen dem motorisierten Fahrzeug (1) und dem gezogenen oder geschobenen Anhänger oder Anbaugerät angeordnet ist,
und wobei die Sensorelemente (22, 34, 47, 79, 80) zur Übertragung derer Messwerte mit einem Auswertegerät (40) verbunden sind,
welches dazu eingerichtet ist, diese Messwerte in Signale für Kraftanzeigen und/oder Momentenanzeigen nach Größe und Richtung umzuwandeln.

2. Messeinrichtung (42, 43, 44, 60) nach Anspruch 1, **dadurch gekennzeichnet,**
**dass** das Auswertegerät (40) in Datenverbindung mit einem Fahrzustand-Managementsystem ist,
welches dazu eingerichtet ist, aus den Messwerten der Sensorelemente (22, 34, 47, 79, 80) instabile Fahrsituationen zu erkennen und Gegensteuermaßnahmen einzuleiten.

3. Messeinrichtung (42, 43, 44, 60) nach Anspruch 2, **dadurch gekennzeichnet,**
**dass** das Fahrzustand-Managementsystem dazu eingerichtet ist,
aus den Messwerten der Sensorelemente (22, 34, 47, 79, 80) Steuersignale für Aktuatoren zur Bewirkung einer Abstimmung der Bremswirkung des motorisierten Fahrzeugs (1) und des Anhängers oder des Anhängegeräts aufeinander zu erzeugen.

4. Messeinrichtung (42, 43, 44, 60) nach einem der Ansprüche 1 bis 3, **dadurch gekennzeichnet,**
**dass** die Messeinrichtung (42, 43, 44, 60) als Modulpaket zwischen einer Anschraubaufnahme (6) am motorisierten Fahrzeug (1) für einen Standard-Anhängebock (8) und diesem Standard-Anhängebock (8) montiert ist,
und **dass** eine Standard-Anhängevorrichtung (17, 27, 29), wie eine Standard-Maulkupplung (17, 27) oder eine Standard-Kugelkopfkupplung (29), direkt am Standard-Anhängebock (8) befestigt ist.

5. Messeinrichtung (42, 43, 44, 60) nach Anspruch 4, **dadurch gekennzeichnet,**
**dass** die Standard-Anhängevorrichtung (17, 27, 29) am Standard-Anhängebock (8) lösbar und höhenverstellbar befestigt ist.

6. Messeinrichtung (42, 43, 44, 60) nach einem der Ansprüche 1 bis 3, **dadurch gekennzeichnet,**
**dass** die Messeinrichtung (42, 43, 44, 60) als Modulpaket an einem Standard-Anhängebock (8) am motorisierten Fahrzeug (1) montierbar ist sowie mittels eines am Standard-Anhängebock (8) angeordneten Kupplungsträgers (26) mit einer Standard-Anhängevorrichtung (17, 27, 29), wie eine Standard-Maulkupplung (17, 27) oder eine Standard-Kugelkopfkupplung (29), verschraubt ist.

7. Messeinrichtung (42, 43, 44, 60) nach Anspruch 6, **dadurch gekennzeichnet,**
**dass** der Kupplungsträger (26, 61) am Standard-Anhängebock (8) lösbar und höhenverstellbar befestigt ist.

8. Messeinrichtung (44) nach einem der Ansprüche 1 bis 7, **dadurch gekennzeichnet,**
**dass** vier Sensorelemente (47) als Kraftsensoren dienen sowie als Wägezellen, Dehnungsmessstreifen oder SAW-Elemente ausgebildet sind,
**dass** die vier Sensorelemente (47) an vier um zwischen 60° und 120° gegeneinander versetzten, sich radial erstreckenden Messarmen (45a) eines messkreuzförmigen Trägers (45) angeordnet sind,
**dass** der messkreuzförmige Träger (45) kraft-, form- oder stoffschlüssig an eine Basisplatte (48) gekoppelt ist,
und **dass** der messkreuzförmige Träger (45) zwischen der Basisplatte (48) und einem Standard-Kupplungsträger (26) eingespannt ist.

9. Messeinrichtung (44) nach Anspruch 8, **dadurch gekennzeichnet,**
**dass** eine Vorspannung auf Messarme (45a) des messkreuzförmigen Trägers (45) mittels zwischen einer Anschraubplatte (28) einer Standard-Anhängekupplung (27, 29) und einem Standard-Kupplungsträger (26) angeordneten Dehnschrauben (50) aufgebracht ist.

10. Messeinrichtung (44, 60) nach Anspruch 8 oder 9, **dadurch gekennzeichnet,**
**dass** der messkreuzförmige Träger (45, 71) eine von seinen Messarmen (45a, 74, 75) axial vorstehende, zur Basisplatte (48, 63) gerichtete zentrale Nabe (46, 77) aufweist,
welche sich an der Basisplatte (48, 63) abstützt und mit dieser kraft-, stoff-, oder formschlüssig gekoppelt ist.

11. Messeinrichtung (44) nach einem der Ansprüche 8 bis 10, **dadurch gekennzeichnet,**
**dass** an den radialen äußeren Enden der Messarme (45a) des messkreuzförmigen Trägers (45) zum Standard-Kupplungsträger (26) gewandte axiale Vorsprünge (45c) als Abstandshalter für die Messarme (45a) gegenüber dem Standard-Kupplungsträger (26) ausgebildet sind.

12. Messeinrichtung (44, 60) nach einem der Ansprüche 8 bis 11, **dadurch gekennzeichnet,**
**dass** die zentrale Nabe (46, 77) in eine Vertiefung (48c, 86) in der Basisplatte (48, 63) eingreift und darin mittels einer eine Bohrung (48e, 69) in einem Wandelement (48d, 68) der Basisplatte (48, 63) durchgreifende Befestigungsschraube (49, 70) befestigt ist.

13. Messeinrichtung (44) nach einem der Ansprüche 8 bis 12, **dadurch gekennzeichnet,**
**dass** die Messeinrichtung (44) als Modulpaket bestehend aus der Anschraubplatte (28, 30), der Standard-Anhängevorrichtung (27, 29), der Adapterplatte (35), der Basisplatte (48), dem messkreuzförmigen Träger (45) und dem Standard-Kupplungsträger (26), die mittels der Dehnschrauben (50) gegeneinander verspannt sind, an einem am motorisierten Fahrzeug (1) befestigten Standard-Anhängebock (8) höhenverstellbar anbringbar ausgebildet ist.

14. Messeinrichtung (60) nach einem der Ansprüche 1 bis 12, **dadurch gekennzeichnet, dass** vier Sensorelemente (79, 80) als Kraftsensoren dienen sowie als Wägezellen, Dehnungsmessstreifen oder SAW-Elemente ausgebildet sind,
dass die vier Sensorelemente (79, 80) an vier um zwischen 60° und 120° gegeneinander versetzten, sich radial erstreckenden Messarmen (74, 75) eines messkreuzförmigen Trägers (71) angeordnet sind,
dass der messkreuzförmige Träger (71) kraft-, form- oder stoffschlüssig mit der Basisplatte (63) verbunden ist,
dass an den messkreuzförmigen Träger (71) eine Anschraubplatte (81) für eine Standard-Kupplung (27, 29) befestigt ist,
und dass die Basisplatte (63) mit einen Standard-Kupplungsträger (61) fest verbindbar ist.

15. Messeinrichtung (60) nach Anspruch 14, **dadurch gekennzeichnet,**
**dass** an den radialen äußeren Enden der Messarme (74, 75) des messkreuzförmigen Trägers (71) zur Anschraubplatte (81) für eine Standard-Kupplung (27, 29) gewandte axiale Vorsprünge (83) als Abstandshalter für die Messarme (74, 75) gegenüber dem Anschraubplatte (81) ausgebildet sind.

16. Messeinrichtung (60) nach einem der Ansprüche 8 bis 12 und 14 bis 15, **dadurch gekennzeichnet,**
**dass** die Messeinrichtung (60) als Modulpaket bestehend aus der Anschraubplatte (81), der Standard-Anhängevorrichtung (27, 29), der Basisplatte (48), dem messkreuzförmigen Träger (71) und dem Standard-Kupplungsträger (61), welche mittels Befestigungsschrauben (65, 66, 70, 84, 85) miteinander verbunden sind, an einem am motorisierten Fahrzeug (1) befestigten Standard-Anhängebock (8) höhenverstellbar anbringbar ausgebildet ist.
